# EUROPEAN PATENT SPECIFICATION

(11) **EP 0 905 196 B1**
(45) Date of publication and mention of the grant of the patent: **14.04.2004**
(21) Application number: 98307774.4
(22) Date of filing: 24.09.1998
(51) Int. Cl.: C08L 83/04, C08K 5/134

(54) **Hydrosilylation reaction curable organosiloxane compositions**
Durch Hydrosilylierung vernetzbare Organosiloxan-Zusammensetzungen
Compositions organosiloxanes réticulables par hydrosilylation

(30) Priority: 26.09.1997 US 938180
(43) Date of publication of application: 31.03.1999
(73) Proprietor: DOW CORNING CORPORATION, Midland Michigan 48686-0994 (US)
(72) Inventor: Bentz, Peter, 65232 Taunusstein (DE); Nakahara, Hideki, Minamiashi-gara-shi, Kanagawa 250-01 (JP); McMahon, Daniel Francis, Midland, Michigan 48642 (US); Scott, Edward Burton, Coleman, Michigan 48618 (US)
(74) Representative: Kyle, Diana

(56) References cited:
- EP-A- 0 531 009
- EP-A- 0 787 766
- US-A- 4 879 339
- US-A- 5 118 735

## Description

This invention relates to a method increasing the mold life of a silicone elastomer mold using organosiloxane compositions that are curable to form organosiloxane elastomers that exhibit extended mold life.

The prior art contains organosiloxane compositions that cure to yield crosslinked elastomers by the reaction of polyorganosiloxanes containing at least two alkenyl groups per molecule with organosilicon compounds containing at least three silicon-bonded hydrogen atoms per molecule as a crosslinker. This reaction is typically catalyzed by platinum group metal compounds.

U.S. Patent 4,879,339 discloses a composition comprising a vinyl containing organopolysiloxane; an organohydrogenpolysiloxane; a platinum compound; an aliphatic hydrocarbon and an antioxidant.

U.S. Patent No 4,654,408 claims a composition comprising a vinyl containing organosilicon compound; a platinum compound and an antioxidant.

The compositions used in the present invention contain a free radical scavenger for radicals that participate in the free radical polymerization of styrene monomers. These free radical scavengers may also be antioxidants. We have unexpectedly found that compositions containing selected free radical scavengers yield elastomers having surprisingly improved mold life.

The present invention resides in our discovery that adding certain free radical scavengers to hydrosilylation reaction curable organosiloxane compositions will extend the mold life of the resulting elastomers.

The hydrosilylation reaction curable organosiloxane composition used in the method of this invention comprises:
A) an alkenyl-containing polyorganosiloxane having an average of at least two silicon-bonded alkenyl groups per molecule;
B) an organohydrogensiloxane having an average of at least two silicon-bonded hydrogen atoms per molecule;
C) a hydrosilylation reaction catalyst, in an amount sufficient to accelerate the curing of the composition; and
D) a free radical scavenger for radicals that participate in the free radical polymerization of styrene; wherein the sum of the average number of silicon-bonded alkenyl groups in Component (A) and the average number of silicon-bonded hydrogen atoms per molecule in Component (B) is greater than 4.

Thus, the present invention relates to a method of increasing the mold life of a silicone elastomer mold, said method comprising the steps of:
I. preparing the curable organosiloxane composition comprising components (A), (B), (C) and (D) as just defined;
II. curing said composition to form a silicone elastomer mold;
III. preparing a curable polyester composition comprising a styrene monomer;
IV. dispensing said polyester composition into said cured silicone elastomer mold;
V. causing said polyester composition to cure to form a cured polyester casting; and
VI. removing said casting part from the said mold.

Alternatively, the exact order of steps (II) and (III) may be conveniently reversed if desired. Optionally, repeating steps III through VI until said mold deteriorates.

Component (A) is a polyorganosiloxane containing an average of at least two alkenyl groups per molecule. It is the major component of our hydrosilylation reaction curable composition. For this composition to properly crosslink, Component (A) must contain an average of at least two alkenyl groups per molecule. In preferred embodiments, Component (A) contains alkenyl groups having from 2 to 12 carbon atoms. Preferred alkenyl groups are represented by the formula -R¹CH=CH₂, where R¹ represents a single bond or an alkylene group containing from 2 to 10 carbon atoms. The alkylene group can be linear or branched. Examples of preferred alkenyl groups are vinyl, 2-propenyl, 3-butenyl, 5-hexenyl, 7-octenyl and 10-undecenyl. Most preferred alkenyl groups are vinyl and hexenyl. In preferred embodiments, at least one alkenyl group is located at the terminal of the molecule chain. In more preferred embodiments, at least two alkenyl groups are located at the terminals of the molecular chain.

In preferred embodiments, Component (A) is represented by the general formula: 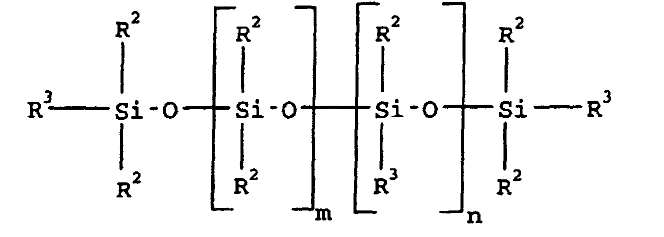 wherein each R² is individually selected from unsubstituted or substituted monovalent hydrocarbon groups containing from 1 to 20 carbon atoms; R³ is R² or an alkenyl group; m ≥ 0; and the value of n is selected such that Component (A) has an average of at least two alkenyl groups per molecule. Preferably, R² is an unsubstituted monovalent hydrocarbon group or a halogenated alkyl group, each having less than 7 carbon atoms. More preferably, R² is an alkyl group, such as methyl or ethyl, a cycloalkyl group such as cyclohexyl, an aryl group such as phenyl, or a halogenated alkyl group, such as chloromethyl, 3-chloropropyl or 3,3,3-trifluoropropyl. Most preferably, R² is methyl. In more preferred embodiments, n is zero.

Generally the siloxane is polymerized to a viscosity from 0.03 to 500 Pa·s, preferably from 2 to 250 Pa·s, at 25°C. It is possible to use either higher or lower viscosity polymers.

The polyorganosiloxane of the present invention may be a homopolymer, or a copolymer. A single polyorganosiloxane, or a mixture of different polyorganosiloxanes, can be used herein.

Methods for preparing the polyorganosiloxanes of Component (A) are sufficiently disclosed in patents and other literature such that a detailed description in this specification is not necessary.

Component (B) of the present invention is an organohydrogensiloxane containing an average of at least two silicon-bonded hydrogen atoms per molecule. It is used to crosslink the claimed composition of this invention. The silicon-bonded hydrogen atoms in Component (B) react with the alkenyl groups in Component (A) to efficiently cure our composition. For our composition to cure to a silicone elastomer, the sum of the average number of silicon-bonded alkenyl groups per molecule in Component (A) and the average number of silicon-bonded hydrogen atoms per molecule in Component (B) must be greater than 4.

Organohydrogensiloxanes that may be used as Component (B) preferably contain an average of more than two silicon-bonded hydrogen atoms per molecule, and more preferably contain an average of at least three silicon-bonded hydrogen atoms per molecule. The remaining valances on the silicon atoms are satisfied with organic groups selected from alkyl groups having less than 7 carbon atoms, halogenated alkyl groups having less than 7 carbon atoms and aryl groups. The preferred aryl group is phenyl. Preferred alkyl groups are methyl, ethyl and hexyl. Most preferred alkyl groups are methyl groups. The preferred halogenated alkyl group is 3,3,3-trifluoropropyl.

The organohydrogensiloxane of Component (B) can have a linear or branched structure and can be a homopolymer, a copolymer or a mixture of these polymers.

Polymers that are suitable for use as Component (B) are polymethylhydrogensiloxane; trimethylsiloxy-terminated polymethylhydrogensiloxane; copolymers of dimethylsiloxane, methylhydrogensiloxane, trimethylsiloxane units; and copolymers of dimethylsiloxane, methylhydrogensiloxane and dimethylhydrogensiloxane units.

A preferred linear type of organohydrogensiloxane has a viscosity of from 0.01 to 10 Pa·s at 25°C. and comprises dialkylsiloxane and alkylhydrogensiloxane units with trialkylsiloxy terminal units. The alkyl groups contain from 1 to 4 carbon atoms and are most preferably methyl.

The amount of Component (B) used is that sufficient to provide the desired degree of crosslinking during cure. Generally, the proportion of Component (B) in our claimed compositions is an amount ranging from 1 to 40 parts by weight, per 100 parts of Component (A). In preferred embodiments, Component (B) is present in an amount ranging from 5 to 30 parts per 100 parts of Component (A). In more preferred embodiments, Component (B) is present in an amount ranging from 7 to 20 parts, per 100 parts of Component (A).

The molar ratio of silicon-bonded hydrogen atoms to vinyl or other ethylenically unsaturated hydrocarbon groups in our compositions is important with respect to the ultimate properties of the cured elastomer. The optimum ratio for the present curable compositions is determined at least in part by the molecular weight of the polyorganosiloxane and the type of crosslinking agent. The relative concentration of organohydrogensiloxane (Component (B)) and polyorganosiloxane (Component (A)) in our composition is equivalent to a molar ratio of silicon-bonded hydrogen atoms to alkenyl radicals that ranges from 0.5:1 to 20:1, more preferably 1:1 to 5:1.

Component (C) is a metal from the platinum group of the periodic table or a compound of such a metal. These metals include platinum, palladium and rhodium. Platinum and platinum compounds are preferred based on the high activity level of these catalysts in hydrosilylation reactions. Catalysts that may be used as Component (C) in the organosiloxane composition of this invention are any of the known forms that are effective in promoting the reaction of -SiH groups with silicon-bonded alkenyl groups.

Suitable forms of platinum include chloroplatinic acid, platinum compounds and complexes of platinum compounds with unsaturated organic compounds or with siloxanes having silicon-bonded groups containing ethylenically unsaturated groups. Additional examples of suitable platinum catalysts include complexes of platinous halides or chloroplatinic acid with divinyltetramethyldisiloxane or tetramethyldisiloxane. Suitable platinum catalysts are further described in U.S. Patent 3,419,593 which teaches additional details about the preparation of such catalysts.

The concentration of Component (C) in the present composition is equivalent to a platinum group metal concentration of 0.1 to 500 parts by weight of said metal, preferably from 5 to 250 parts by weight of said metal, and more preferably 25 to 100 parts by weight of said metal, per million parts (ppm), based on the combined weights of Components (A) and (B).

Component (D) is a free radical scavenger for styrene free radical polymerization radicals. By the term "styrene free radical polymerization radicals", we mean those radicals that are capable of participating in the free radical polymerization of styrene monomers. Component (D) functions to increase the mold life of the organosiloxane elastomer that results when the composition of the present invention is cured.

A curable polyester composition is frequently used to make castings when it is desirable to make a large number of inexpensive reproductions, such as when manufacturers wish to produce and sell small figurines in large quantities. A curable polyester composition is usually comprised of a base resin and a curing agent. The curable polyester composition may also contain cure accelerators or other additives. The base resin is normally composed of a polyester resin and.styrene monomers. The curing agent is typically a peroxide. The curable polyester composition cures via a styrene free radical polymerization reaction. The peroxide reacts with the styrene monomers to form styrene radicals. The styrene radicals react with the polyester resin and with each other to cure the curable polyester composition. If an effective quantity of a sufficiently reactive free radical scavenger is introduced into the curable polyester composition, the cure of the composition will be inhibited. The cure of the curable polyester composition may be prevented or the rate at which the curable polyester composition will cure may be decreased.

We have found that the mold life of an organosiloxane elastomer mold in which polyester castings are made can be significantly increased by incorporating chemical compounds which are capable of scavenging the free radicals that participate in the free radical polymerization of styrene. Many chemical compounds which are capable of scavenging these free radicals are known and are found in scientific literature. One such list is found on pages II-67 to II-142 of the 3^{rd} Edition of the Polymer Handbook, edited by J. Brandrup and E.H. Immergut. Another list is found on page II-80 of the 2^{nd} Edition of the Polymer Handbook. A person of ordinary skill in the art can determine whether a particular chemical compound which is listed in such handbooks, or whether any known antioxidant may be used as Component (D), by conducting a simple experiment.

To determine whether a particular chemical compound (hereinafter "Compound X") will act as a free radical scavenger for styrene free radical polymerization radicals, 200 grams of a curable polyester composition ("Composition 1") is first prepared. Composition 1 is normally comprised of 100 parts of a polyester base, 1 part of a curing agent, and 0.165 part of a cure accelerator. The polyester base is usually comprised of polyester resin and styrene monomers. The preferred ratio of polyester resin to styrene monomers in Composition 1 is 60:40. "SILMAR" Resin S40 is conveniently used as the polyester base. "SILMAR" is a registered trademark of BP Chemicals, Inc., of Cleveland, OH. The curing agent is comprised of a peroxide. The preferred peroxide is methyl ethyl ketone peroxide. The preferred cure accelerator is 90 wt. % of N, N dimethylaniline and 10 wt. % of cobalt naphthenate. One hundred grams of Composition 1 is allowed to cure under room temperature conditions. The time that it takes for this composition to cure to a solid is measured and recorded as T₁. One thousand parts of Compound X per one million parts of Composition 1 is then added to 100 grams of Composition 1 to form Composition 2. The time that it takes Composition 2 to cure to a solid state is measured and recorded as T₂. If T₂ > 1.2T₁, then Compound X is a free radical scavenger for styrene free radical polymerization radicals.

The preferred free radical scavenger is a chemical compound which is miscible with Components (A) and (B) and which does not interfere with the catalytic properties of Component (C). Because sulfur containing compounds tend to inhibit the catalytic action of Component (C), the preferred free radical scavenger is essentially free of sulfur. Because sulfur containing compounds tend to inhibit the catalytic action of Component (C), the preferred free radical scavenger is free of reactive sulfur.

In preferred embodiments, Component (D) is selected from the group consisting of: (i) octadecyl 3-(3,5-di-tert-butyl-4-hydroxyphenyl)propionate; (ii) tetrakis (methylene-3-(3',6'-Di-T-Butyl-4'-hydroxyphenyl) propionate)methane; (iii) styrenated phenol; (iv) phenol derivatives consisting of a mixture of mono(methylbenzyl)phenol, bis(methylbenzyl)phenol, and tris(methylbenzyl)phenol (having a chemical abstract # 61788-44-1); (v) trilauryl trithio phosphite; (vi) tri(p-cresol)phosphite; (vii) triisooctyl phosphite; (viii) diphenyl isodecyl phosphite; (ix) dinonylphenyl bis(nonylphenyl) phosphite having the formula C₅₄H₈₇O₃P; (x) an alkyl-aryl phosphite having the formula C₃₀H₅₅O₃P; and (xi) mixtures thereof .

In more preferred embodiments, Component (D) is selected from the group consisting of octadecyl 3-(3,5-di-tert-butyl-4-hydroxyphenyl)propionate; trilauryl trithio phosphite; styrenated phenols and mixtures thereof.

In preferred embodiments, the amount of the free radical scavenger that is present in the composition of our invention, is 0.001 to 8 wt. %, based on the sum of the weights of Components (A) through (D). If more than 8 wt. % of said scavenger is used in our composition, excessive cure inhibition at the surface of the polyester parts cast in our silicone elastomer mold) will be present. If less than 0.001 wt. % of the free radical scavenger is used, then mold life increase of the resulting silicone elastomer mold will be negligible. In more preferred embodiments, the amount of free radical scavenger will be 0.001 wt. % to 4 wt. %. In most preferred embodiments, the amount will be 0.004 wt. % to 2 wt. % of the sum of the weights of components (A) through (D).

When Component (D) is octadecyl 3-(3,5-di-tert-butyl-4-hydroxyphenyl)propionate, the preferred amount of Component (D) in the present composition is 0.001 wt. % to 0.5 wt. %, more preferably 0.004 wt. % to 0.07 wt.%. When Component (D) is trilauryl trithio phosphite, the preferred amount of Component (D) in said composition is 0.5 wt. % to 4 wt. %, more preferably 1.5 wt. % to 2 wt.%. The preferred styrenated phenol is a mixture of monostyrenated phenol, distyrenated phenol and tristyrenated phenol. When Component (D) is a mixture of monostyrenated phenol, distyrenated phenol, and tristyrenated phenol, the preferred amount of Component (D) in our claimed composition is 0.001 wt. % to 0.5 wt. %, more preferably 0.003 wt. % to 0.06 wt.%. In preferred embodiments of the present invention, Component (D) is a liquid at 25°C. or is soluble in Component (A) and/or Component (B).

When an organosiloxane elastomer mold is used to make polyester castings, our curable polyester composition is first poured or otherwise dispensed into the organosiloxane elastomer mold. Then the curable polyester composition cures to form a polyester casting. The casting is pulled from the mold and the process is repeated to make another casting from the same mold. The curable polyester composition has a tendency to leach or otherwise diffuse into the organosiloxane elastomer mold. As the curable polyester composition contained within the mold cures, the mold will begin to distort. The distortion and deterioration of the mold is progressive as additional polyester castings are made from that mold. The distortion and deterioration is minimized when the organosiloxane composition used to make the organosiloxane elastomer mold contains a free radical scavenger for styrene free radical polymerization radicals. We have found that when the organosiloxane elastomer mold is prepared using an organosiloxane composition containing Component (D), the cure of the polyester composition which has leached into the mold is inhibited. The mold, therefore, experiences less distortion and deterioration and it has a longer life.

Curable polyester compositions are typically comprised of an unsaturated polyester base resin and styrene monomers. Free radical styrene polymerization occurs as part of the process of curing our curable polyester composition. Component (D) functions to scavenge the free radicals which participate in the free radical styrene polymerization and thereby prevent the curable polyester composition which has leached into the organosiloxane elastomer mold from curing within that matrix. The distortion and deterioration of the organosiloxane elastomer mold which occurs upon cure of the curable polyester composition is thereby minimized and the mold life of the organosiloxane composition is thereby increased.

Composition used in the present invention may contain additional ingredients to modify the properties of the curable compositions or cured materials prepared from said compositions. These additional ingredients include liquid diluents; reinforcing fillers such as finely divided silica of the fume or precipitated type; non-reinforcing fillers such as quartz and calcium carbonate; surfactants; stabilizers to inhibit degradation by heat and/or ultraviolet light; dyes; pigments; working time extenders and flame retardants. Non-reactive polyorganosiloxanes are a preferred class of diluents and trimethylsiloxy-terminated dimethylsiloxane is preferred.

Fillers and other optional components can be packaged either with the base, with the curing agent or with both.

The curable compositions used in the present invention are prepared by blending all of the components together. Curing begins when Component (A) is mixed with Component (B) in the presence of a hydrosilylation catalyst. Complete cure requires from several minutes to several hours, depending upon, among other things, the temperature, the type and concentration of crosslinker, and the type and concentration of catalyst.

When the composition is in the form of a multi-part system, the composition is prepared by formulating a base and a curing agent and then by mixing said base and curing agent. Curing begins when the base and curing agent are mixed together. When our curable compositions are prepared, the mix ratio can vary, depending upon the formulation of each part, from 1:1 to 40:1, parts of base per part of curing agent. Preferred mix ratios are 1:1, 10:1 and 20:1.

The present invention also relates to a method in which the organosiloxane composition is packaged in a multi-part system wherein Component (A) and Component (B) are packaged in separate parts.

In a preferred embodiment, Component (D) is admixed with Component (A) before Component (A) is admixed with the other components of our composition. Prior to addition of Component (D), the temperature of Component (A) is preferably greater than 25°C.

The present invention also provides a method for increasing mold life of a silicone elastomer mold, said method comprising the steps of:
I. preparing the curable organosiloxane composition of claim 1;
II. curing said organosiloxane composition to form a silicone elastomer mold;
III. preparing a curable polyester composition comprising a styrene monomer;
IV. dispensing said polyester composition into said cured silicone elastomer mold;
V. causing said polyester composition to cure to form a cured polyester casting; and
VI. removing said casting from said mold.

Alternatively, the exact order of steps (II) and (III) may be conveniently reversed if desired. Optionally, repeating steps III through IV until said mold deteriorates.

The accuracy of the reproduction is determined by physically comparing the first polyester casting pulled from said mold to the last polyester casting or by measuring changes in the silicone elastomer mold itself. We have especially found the Start Wave, Medium Wave, End Wave and Consecutive Chunking determinations to be a convenient and consistent method for determining whether a casting is an accurate reproduction of the original mold and for assessing the life of a silicone elastomer mold. Start Wave, Medium Wave, End Wave and Consecutive Chunking are described below in further detail in our examples.

The elastomers prepared using our claimed compositions are suitable for use in a variety of applications, including as sealants, coating materials, and as pottants or encapsulants for electrical or electronic devices. These compositions are particularly useful for preparing silicone elastomer molds.

The following example describes a preferred curable composition of the present invention. Unless otherwise indicated, all parts and percentages herein are by weight and all viscosities were measured at 25°C.

For Comparative Example 1 and Example 1, a silicone elastomer mold was prepared by curing a curable organosiloxane composition. This curable composition was prepared by admixing a base and a curing agent at a mix ratio of 10:1.

Each silicone elastomer mold was prepared by pouring 45 grams of the curable composition into a master mold. The composition was then de-aired, under a vacuum of 29 inches of Hg (760 mm) for 4 minutes. Another 45 grams of the same curable composition was then poured into the master mold and de-aired.

The master mold consisted of an aluminum cone bolted to an aluminum support flange which had been sprayed with a TEFLON™ mold release compound (Miller Stephenson MS-136N/CO2™), and a polyvinyl chloride sleeve. TEFLON is a registered trademark of E. I. DuPont DeNemours and Company, Wilmington, DE. The cone had a base of 3 cm (1 3/16 inches), a height of 7 cm (2 3/4 inches), three wedge shaped tapering cut sections and 9 holes evenly spaced over the surface of the cone. Because the cone of the master mold had these wedge shaped tapering cut sections, the silicone elastomer mold made therefrom had corresponding wedge shaped tapering protrusions which were called vanes. Because of these 9 holes, the silicone elastomer mold also had 9 corresponding cylindrically shaped projections which were called pegs.

The mold life of a silicone elastomer mold is a measure of the number of accurately reproduced parts that are cast from that mold. Because the casting process and other factors cause changes in such a mold, the number of parts, or "castings", which can be made from a single mold is not infinite. As the number of castings from a particular mold increases, so does the deterioration in the silicone elastomer mold. This deterioration takes various forms. Common forms include changes in the physical dimensions or characteristics of the mold. As the mold changes, so do the parts cast therefrom. When changes in the mold are sufficiently great, the cast parts will not be an accurate reproduction of the master mold. The number of parts produced from a silicone elastomer mold before said parts are unacceptable is defined as the mold life.

Changes in fine details, such as vanes or pegs, of a silicone elastomer mold are corresponding by reflected in the casting. Such changes indicate that the silicone elastomer mold has begun to deteriorate. When the mold deteriorates to the point that the resultant casting is not sufficiently accurate, the user will begin using a new mold.

Evidence of deterioration of the silicone elastomer molds of the present examples are first detected at the line of the apex of the wedge shaped tapering cut of the casting. The first parts produced from a new silicone elastomer mold will have an apex which is a straight line. As the mold deteriorates, this apex line will begin to have a wavy appearance. This appearance is clearly due to changes in the silicone elastomer mold. The number of castings which are produced before the amplitude of the wavy apex line is greater than 0.75 mm is called the "Start Wave". The number of castings which are produced before this amplitude is greater than 1 mm is called the "Medium Wave". The number of castings produced before the amplitude is greater than 1.5 mm is called the "End Wave". The number of castings produced before consecutive pieces of the elastomer are pulled from the mold is called "Consecutive Chunking".

In moldmaking applications where fine details are critical, a silicone elastomer mold will only be used until a point in time corresponding to the Start Wave. The larger the number of parts which are produced before the Start Wave, the longer the mold life. In other applications, a silicone elastomer mold will be used until a point in time corresponding to the Medium Wave. In this case, the larger the number of parts which are produced before the Medium Wave, the longer the mold life. In those applications where fine details are not critical, customers may use a silicone elastomer mold until the point in time corresponding to the End Wave. In such cases, the larger the number of parts which are produced before the End Wave, the longer the mold life. In yet other applications, customers may use a silicone elastomer mold until the point in time corresponding to Consecutive Chunking. In such cases, the larger the number of parts which are produced before Consecutive Chunking, the longer the mold life. Therefore, the greater the number of parts that are cast from a silicone elastomer mold before the onset of Start Wave, Medium Wave, End Wave or Consecutive Chunking, the greater the mold life of that silicone elastomer mold.

Except as noted below, the silicone elastomer molds used in Comparative Example 1 and Example 1 were prepared by allowing curable organosiloxane compositions to cure for 24 hours in a master mold. The aluminum cones were then removed and robotic mold life testing was begun.

Mold life testing was completed by counting the number of castings that were prepared from each silicone elastomer mold before Start Wave, Medium Wave, End Wave and Consecutive Chunking. The castings were prepared from a polyester resin. For Example 1 and Comparative Example 1, the polyester resin was prepared by admixing 23 grams of SILMAR™ S-40 polyester resin containing 0.10% of N,N-dimethylaniline and 0.010% of cobalt napthenate and 0.3 gram of LUPERSOL™ DDM-9 catalyst. "SILMAR" is a registered trademark of BP Chemicals Inc., Cleveland, Ohio. "LUPERSOL" is a registered trademark of Pennwalt Corporation, Philadelphia, PA. The polyester resin was poured into the silicone elastomer mold and allowed to cure for twenty minutes at room temperature to form a cured polyester casting. The casting was pulled from said mold and inspected for indications of Start Wave, Medium Wave, End Wave or other defects. The experiment was repeated using the same cured silicone elastomer mold and newly mixed or cured polyester resins until End Wave conditions were met or the silicone elastomer mold otherwise failed. The number of castings made with each silicone elastomer mold is reported in Table 1. To eliminate variability, the experiment was conducted using a robotic mold life tester.

### Comparative Example 1

Base: 100 Parts of an admixture of 61.9 parts of dimethylvinylsiloxy-terminated dimethylsiloxane; 29 parts of trimethylated silica; 7 parts of dimethylhexenylsiloxy-terminated methylhexenylsiloxane-dimethylsiloxane copolymer; 0.008 part of a chloroplatinic acid complex of divinyltetramethyldisiloxane diluted with dimethylvinylsiloxy-terminated polydimethylsiloxane to provide 0.88 weight percent of platinum metal and 2 parts of zirconium silicate.

Curing Agent: 10 parts of an admixture of 30 parts of dimethylvinylsiloxy-terminated dimethylsiloxane; 2 parts of methylhydrogensiloxane; 2 parts of methylvinylcyclosiloxanes and 57 parts of dimethylhydrogen-terminated dimethylsiloxane.

### Example 1

Base: 100 parts of the base of Comparative Example 1.

Curing Agent: 10 parts of curing agent of Comparative Example 1 and 0.0005 part of octadecyl 3-(3,5-di-tert-butyl,4-hydroxyphenyl)propionate.

**TABLE 1**

| | Comparative Example 1 | Example 1 |
|---|---|---|
| Start Wave | 31 | 47 |
| Medium Wave | 41 | 62 |
| End Wave | 72 | 69 |
| Consecutive Chunking | 73 | 69 |

## Claims

1. A method of increasing the mold life of a silicone elastomer mold, said method comprising the steps of:
I. preparing a curable organosiloxane composition comprising:
A) an alkenyl-containing polyorganosiloxane having an average of at least two silicon-bonded alkenyl groups per molecule;
B) an organohydrogensiloxane having an average of at lest two silicon-bonded hydrogen atoms per molecule;
C) a hydrosilylation reaction catalyst, in a concentration sufficient to promote curing of a mixture of Component (A) and Component (B); and
D) a free radical scavenger for radicals that participate in the free radical polymerization of styrene; wherein the sum of the average number of silicon-bonded alkenyl groups in Component (A) and the average number of silicon-bonded hydrogen atoms per molecule in Component (B) is greater than 4;
II. curing said organosiloxane composition to form a silicone elastomer mold;
III. preparing a curable polyester composition comprising a styrene monomer;
IV. dispensing said polyester composition into said cured silicone elastomer mold;
V. causing said polyester composition to cure to form a cured polyester casting; and
VI. removing said casting from said mold.

2. The method according to claim 1 wherein the order of steps (II) and (III) is reversed.

3. The method according to claim 1 or 2, wherein Component (B) has an average of at least three silicon-bonded hydrogen atoms per molecule.

4. The method according to any of claims 1 to 3, wherein Component (B) is present in. an amount from 7 to 20 parts by weight per 100 parts of Component (A).

5. The method according to any of claims 1 to 4, wherein Component (C) is platinum or a platinum-containing compound.

6. The method according to any of claims 1 to 5, wherein the organosiloxane composition is packaged in a multi-part system wherein Components (A) and (B) are packaged in separate parts.

7. The method according to any of claims 1 to 6, further comprising the step of (VII) repeating steps (III) to (VI) until said mold deteriorates to the point where the last polyester casting pulled from said mold is not an accurate reproduction of said cured silicone elastomer mold.

8. The method according to any of claims 1 to 7, wherein Component (D) is mixed with Component (A) before Component (A) is admixed with the other components of the composition.

## Patentansprüche

1. Verfahren zur Verlängerung der Lebensdauer einer Siliconelastomergießform, wobei dieses Verfahren die Schritte umfasst:
I. Herstellen einer härtbaren Organosiloxanzusammensetzung, enthaltend:
A) ein alkenylhaltiges Polyorganosiloxan mit durchschnittlich mindestens zwei siliciumgebundenen Alkenylgruppen pro Molekül,
B) ein Organowasserstoffsiloxan mit durchschnittlich mindestens zwei siliciumgebundenen Wasserstoffatomen pro Molekül,
C) einen Hydrosilylierungsreaktionskatalysator in einer Konzentration, die ausreichend ist, um Härten einer Mischung aus Komponente (A) und Komponente (B) zu fördern, und
D) einen Radikalfänger für Radikale, die an der radikalischen Polymerisation von Styrol teilnehmen, wobei die Summe der mittleren Anzahl von siliciumgebundenen Alkenylgruppen in Komponente (A) und der mittleren Anzahl von siliciumgebundenen Wasserstoffatomen pro Molekül in Komponente (B) größer als 4 ist.
II. Härten dieser Organosiloxanzusammensetzung, um eine Siliconelastomergießform auszubilden,
III. Herstellen einer härtbaren Polyesterzusammensetzung, die ein Styrolmonomer enthält,
IV. Verteilen dieser Polyesterzusammensetzung in dieser gehärteten Siliconelastomergießform,
V. Veranlassen, dass diese Polyesterzusammensetzung härtet, um ein gehärtetes Polyesterformgussstück zu bilden, und
VI. Entfernen dieses Formgussstücks aus dieser Gießform.

2. Verfahren nach Anspruch 1, worin die Reihenfolge der Schritte (II) und (III) umgekehrt ist.

3. Verfahren nach Anspruch 1 oder 2, worin Komponente (B) durchschnittlich mindestens drei siliciumgebundene Wasserstoffatome pro Molekül aufweist.

4. Verfahren nach einem der Ansprüche 1 bis 3, worin Komponente (B) in einer Menge von 7 bis 20 Gewichtsteilen pro 100 Gewichtsteile Komponente (A) vorhanden ist.

5. Verfahren nach einem der Ansprüche 1 bis 4, worin Komponente (C) Platin oder eine platinhaltige Verbindung ist.

6. Verfahren nach einem der Ansprüche 1 bis 5, in dem die Organosiloxanzusammensetzung in einem mehrteiligen System verpackt ist, worin Komponenten (A) und (B) in getrennten Teilen verpackt sind.

7. Verfahren nach einem der Ansprüche 1 bis 6, weiterhin den Schritt (VII) des Wiederholens der Schritte (III) bis (VI) umfassend, bis diese Gießform bis zu dem Punkt zerstört ist, wo das letzte Polyesterformgussstück, das aus dieser Form gezogen wird, keine akkurate Reproduktion dieser gehärteten Siliconelastomergießform ist.

8. Verfahren nach einem der Ansprüche 1 bis 7, worin Komponente (D) mit Komponente (A) vermischt wird, bevor Komponente (A) mit den anderen Komponenten der Zusammensetzung vermischt wird.

## Revendications

1. Procédé consistant à augmenter la durée de vie de moule d'un moule d'élastomère de silicone, ledit procédé comprenant les étapes consistant à :
I. préparer une composition d'organosiloxane durcissable comprenant :
A) un polyorganosiloxane contenant des alcényles ayant une moyenne d'au moins deux groupes alcényle liés à du silicium par molécule ;
B) un organohydrogènosiloxane ayant une moyenne d'au moins deux atomes d'hydrogène liés à du silicium par molécule ;
C) un catalyseur de réaction d'hydrosilylation, dans une concentration suffisante pour favoriser le durcissement d'un mélange de composant (A) et de composant (B) ; et
D) un piégeur de radicaux libres pour les radicaux qui participent à la polymérisation radicalaire du styrène ; dans laquelle la somme du nombre moyen de groupes alcényle liés à du silicium dans le composant (A) et du nombre moyen d'atomes d'hydrogène' liés à du silicium dans le composant (B) est supérieure à 4 ;
II. durcir ladite composition d'organosiloxane pour former un moule d'élastomère de silicone ;
III. préparer une composition de polyester durcissable comprenant un monomère de styrène ;
IV. délivrer ladite composition de polyester dans ledit moule d'élastomère de silicone durci ;
V. provoquer le durcissement de ladite composition de polyester pour former une pièce coulée de polyester durci ; et
VI. enlever ladite pièce coulée dudit moule.

2. Procédé selon la revendication 1 dans lequel l'ordre des étapes (II) et (III) est inversé.

3. Procédé selon la revendication 1 ou 2, dans lequel le composant (B) a une moyenne d'au moins trois atomes d'hydrogène liés à du silicium par molécule.

4. Procédé selon l'une quelconque des revendications 1 à 3, dans lequel le composant (B) est présent dans une quantité de 7 à 20 parties en poids par 100 parties en poids du composant (A).

5. Procédé selon l'une quelconque des revendications 1 à 4, dans lequel le composant (C) est du platine ou un composé contenant du platine.

6. Procédé selon l'une quelconque des revendications 1 à 5, dans lequel la composition d'organosiloxane est conditionnée dans un système en plusieurs parties dans lequel les composants (A) et (B) sont conditionnés dans des parties différentes.

7. Procédé selon l'une quelconque des revendications 1 à 6, comprenant en outre l'étape consistant à (VII) répéter les étapes (III) et (VI) jusqu'à ce que ledit moule se détériore jusqu'au point où la dernière pièce moulée de polyester tirée dudit moule n'est pas une reproduction précise dudit moule d'élastomère de silicone durci.

8. Procédé selon l'une quelconque des revendications 1 à 7, dans lequel le composant (D) est mélangé avec le composant (A) avant que le composant (A) soit mélangé avec les autres composants de la composition.
